(19) Europäisches Patentamt
European Patent Office
Office européen des brevets

(11) EP 2 851 377 A1

(12) EUROPEAN PATENT APPLICATION

(43) Date of publication:
**25.03.2015 Bulletin 2015/13**

(51) Int Cl.:
***C08F 293/00*** *(2006.01)* ***C08F 2/22*** *(2006.01)*

(21) Application number: **13185214.7**

(22) Date of filing: **19.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **Synthomer Deutschland GmbH
45772 Marl (DE)**
- **Max-Planck-Gesellschaft zur Förderung der Wissenschaften e.V.
80539 München (DE)**

(72) Inventors:
- **Araujo, Odair
45721 Haltern am See (DE)**
- **Greiner, Katja
45768 Marl (DE)**
- **Froimowicz, Pablo
38600 Fontaine (FR)**
- **Landfester, Katharina
55122 Mainz (DE)**
- **Scholten, Christoph
45131 Essen (DE)**
- **van Heukelum, Bernd
45663 Recklinghausen (DE)**

(74) Representative: **f & e patent
Fleischer, Engels & Partner mbB, Patentanwälte
Braunsberger Feld 29
51429 Bergisch Gladbach (DE)**

(54) **Triblock copolymers by RAFT polymerization in miniemulsion**

(57) The present invention relates to a non-stop, one-pot method for the preparation of tri-block copolymers ABA by reversible addition fragmentation transfer (RAFT) polymerization using miniemulsion technology and to a latex obtainable by said method.

EP 2 851 377 A1

## Description

The present invention relates to a non-stop, one-pot method for the preparation of tri-block copolymers ABA by reversible addition fragmentation transfer (RAFT) polymerization using miniemulsion technology and to a latex obtainable by said method.

### Background of the invention

In recent years the reversible addition fragmentation transfer (RAFT) polymerization has been developed in order to tailor the polymer, particularly block copolymer architectures according to the application needs of such polymers. Particularly by using these RAFT transfer agents polymers with a narrow molecular weight distribution can be obtained, expressed as polydispersity factor. Such RAFT polymerizations are considered to be as living or controlled polymerizations. For example, WO98/01478 describes the polymerization of homo- and block polymers using a wide range of ethylenically unsaturated monomers having a narrow molecular weight distribution using thio compounds as transfer agents.

US 6,369,158 discloses a process for making dibenzyltrithiocarbonate and its use as transfer agent for emulsion polymerization. This reference particularly deals with the random emulsion copolymerization of 1,3-butadiene and styrene in a two-step process.

US 7,098,280 relates to a wide range of controlled polymerization methods, inter alia also to RAFT polymerization. Furthermore, this reference describes the possibility of conducting the polymerization as an emulsion polymerization and particularly refers to true emulsion polymerization, miniemulsion polymerization, micro emulsion polymerization as well as suspension and dispersion polymerization. Particularly with respect to miniemulsion polymerization it is described that only low solids contents are obtainable, but there is no description of the combination of RAFT polymerization using miniemulsion technology. Particular examples relate to a true emulsion polymerization of polystyrene isoprene styrene triblock copolymers using dibenzyltrithiocarbonate as the RAFT agent. These examples describe a two-step process wherein first a styrene homopolymer is produced with complete conversion and then, subsequently, a conjugated diene is added. In example 26 with the addition of isoprene to the previously prepared polystyrene latex also additional free-radical initiators are added with the result that also free homopolymers of isoprene will be produced in addition to the desired block copolymer. In example 44 a polystyrene latex obtained by complete conversion of styrene in micro emulsion technology butadiene and additional RAFT agent is added, which resulted, particularly at higher butadiene conversion, to unwanted cross-linking and insoluble polymers. Furthermore, the solids content is rather low at the low butadiene conversion employed to avoid cross-linking.

EP-A 1 205 492 disclosed a RAFT polymerization in miniemulsion in a multi-step process. First, dormant chains of the pre-made living polymer are produced and then a miniemulsion is formed wherein hexadecane, the dormant chains and additional amounts of the monomer used for forming the dormant chains form the dispersed oil phase. In some examples a second monomer is added to form an AB block copolymer.

US 7,317,050 is directed to the formation of symmetrical ABA block copolymer by RAFT polymerization in miniemulsion. As is evident from the examples, first the monomer having the lower Tg is polymerized to almost complete conversion (greater than 96 %), then polymerization is stopped and a sample is withdrawn. To this sample containing the first block the second polymer having the higher Tg (styrene) is added together with additional free-radical initiator. Thus, this reference describes a two-step process wherein in the second step an additional initiator is added, which again results in the formation of homopolymer of the second monomer in addition to the desired block copolymer.

The above-discussed approach shown in the prior art to make block copolymers might be of particular interest for making thermoplastic elastomers (TPEs) whereby it is desired that the terminal positions of the ABA block copolymer, i.e. the A block, a thermoplastic polymer chain is formed, based on a monomer mixture resulting in a block having a higher Tg than the central block having elastomeric properties.

Thus, it is the object of the present invention to provide a method that is less complicated than the two-step processes known from the prior art and results in ABA block copolymers having preferably TPE properties, whereby the formation of non-block polymers of the employed monomers is reduced, preferably avoided.

It is another object of the present invention to be able to tailor the properties of such ABA block copolymers in wide ranges by a controlled polymerization process to also achieve a narrow molecular weight distribution and latices having a high solids content.

### Summary of the invention

This and other objects of the present invention are attained by a process for the preparation of tri-block copolymers ABA by reversible addition fragmentation transfer (RAFT) polymerization comprising:

- providing a miniemulsion in presence of a surfactant comprising

  i) a dispersed oil phase containing a first ethylenically unsaturated monomer or a first mixture of ethylenically unsaturated monomers and a difunctional RAFT-agent; and
  ii) a continuous aqueous phase;

- subjecting the first ethylenically unsaturated monomer or first mixture of ethylenically unsaturated monomers in presence of a free-radical initiator to free-radical polymerization at a temperature ranging from 5 to 120°C;
- starting to add a second ethylenically unsaturated monomer or a second mixture of ethylenically unsaturated monomers different from the first ethylenically unsaturated monomer or first mixture of ethylenically unsaturated monomers before conversion of the first ethylenically unsaturated monomer or first mixture of ethylenically unsaturated monomers has reached 55 % without interrupting the free-radical polymerization; and
- continuing the free-radical polymerization, wherein
  the first ethylenically unsaturated monomer or first mixture of ethylenically unsaturated monomers is selected as to provide a polymer having a glass transition temperature (Tg) of at least 30°C and the second ethylenically unsaturated monomer or second mixture of ethylenically unsaturated monomers is selected as to provide a polymer having a glass transition temperature (Tg) of at least 5°C lower than the $T_g$ of the polymer of the first ethylenically unsaturated monomer or first mixture of ethylenically unsaturated monomers.

Furthermore, the present invention relates to an aqueous emulsion of a symmetrical ABA block copolymer obtainable by the methods according to the present invention.

The method according to the present invention has the advantage that it is a non-stop one-pot method with the result that contrary to the teachings of the above-discussed prior art the polymerization process does not have to be interrupted and can be performed in a single step without any intermediate work-up step that results in an improved process efficiency making the inventive method particularly suitable for industrial production of aqueous emulsions of tri-block copolymers having a controlled polymer architecture.

Furthermore, the present inventors in their intensive research have recognized that it is essential in the inventive RAFT polymerization in miniemulsion, wherein the first monomer or mixture of first monomers results in a Tg of at least 30°C and the monomers or mixture of monomers that result in the second block are selected so as to provide a $T_g$ for the second block that is at least 5 °C below the Tg of the first block, to add the second monomer or mixture of second monomers comprised in the second block before the conversion of the monomer or mixture of monomers constituting the first block has reached 55% in order to minimize or preferably essentially avoid formation of non-block (co)polymers of the first or mixture of the first monomers or non-block (co) polymers comprising the second or mixture of second monomers, as defined above. To further minimize the possibility of non-block polymer formation it is also beneficial not to add any free-radical initiator after the addition of the second monomer or mixture of second monomers has started.

For ease of description in the following, if the term "first monomer" or "second monomer" is used, it encompasses a mixture of first monomers and mixture of second monomers, respectively. According to one embodiment of the present invention a single first monomer and a single second monomer is used.

<u>Detailed description of the present invention</u>

As described above, the present invention relates to a controlled non-stop one-pot RAFT polymerization process in miniemulsion. RAFT polymerization is a controlled living-type polymerization process known to a person skilled in the art in the field of polymer chemistry. A comprehensive review of RAFT polymerization is given in C. Barner-Kowollik, Handbook of RAFT Polymerization, Wiley-VCH Verlag GmbH & Co. KGaA, Weinheim, 2008. The Handbook of RAFT Polymerization provides detailed information with respect to inter alia the RAFT polymerization mechanism, suitable process conditions and suitable RAFT agents. Thus, it is deemed not to be necessary to provide a more detailed discussion of RAFT polymerization in the present application. Instead, the Handbook of RAFT Polymerization is incorporated herein by reference.

According to the present invention, the RAFT polymerization is conducted in miniemulsion. The term "miniemulsion" as used in the context of the present invention is defined in accordance with Terminology of Polymers and Polymerization Processes in dispersed Systems (IUPAC recommendations 2011), Pure Applied Chemistry, Vol. 83, No. 12, pages 2225 to 2259, 2011. According to this definition, a miniemulsion is an emulsion in which the particles of the dispersed phase have diameters in the range of from approximately 50 nm to 1 $\mu$m.

In the present application a more limited definition for the term miniemulsion applies as to refer to emulsions in which the particles of the dispersed phase have diameters in the range of from approximately 30 nm to 500 nm.

This definition is in line with Landfester, K. Polyreactions in Miniemulsions. Macromol. Rapid Commun. 2001, 22, 896-936, wherein it is disclosed that in the first step of the miniemulsion process, small stable droplets of 30 - 500

nm are formed by shearing a system containing the dispersed phase, the continuous phase, a surfactant and an osmotic pressure agent (hydrophobic compound). In a second step, these droplets are polymerized without changing their identity. The droplets are small enough that the system benefits from all the advantages of conventional systems during polymerization, e.g., high rates of polymerization and high molecular weights of the resulting polymers.

According to Froimowicz, P., Klinger, D. and Landfester, K. Photoreactive Nanoparticles as Nanometric Building Blocks for the Generation of Self-Healing Hydrogel Thin Films. Chem. Eur. J. 2011, 17, 12465-12475 compared to emulsion polymerizations, the miniemulsion polymerization technique is characterized by the suppression of the diffusion of compounds between individual nanosized droplets, which are created before the polymerization as small, homogeneously distributed and highly stable moieties.

The droplet size of the miniemulsion can be measured with dynamic light scattering devices like Submicron Particle Sizer Nicomp 380 from PSS-Nicomp, Particle Sizing Systems, Santa Barbara, California, USA.

By miniemulsion polymerization it is possible to carry out a polymerization in a heterogeneous system using monomer droplets as main loci of polymerization. Emulsions can degrade principally by two means: coalescence and diffusion degradation (or Ostwald ripening). Coalescence can be precluded by the use of a suitable surfactant while diffusional degradation by the addition of a hydrophobic compound to the oil phase. These species can reduce the total Gibbs-free energy of the particles, thus decreasing the driving force for the diffusion. As a consequence, these droplets remain stable for unusually long periods of time, i.e. the system is kinetically stable. Miniemulsion droplets are produced by using high shear rates for making the emulsion. As devices for providing high shear rates for making the miniemulsion high shear rotor stator, high pressure homogenizer, ultra sound probe and static mixers can be used.

This results in a large droplet surface area which has a two-fold effect: First, the probability of droplet nucleation is enhanced and, second, there is only little free surfactant in the water phase available for micellar or homogeneous nucleation, thus making miniemulsion droplets the main loci of nucleation. In miniemulsions the monomer is in fact stored from the beginning of the process in the droplets, i.e. in the polymer particle after the nucleation step. This is also due to the swelling capability of the hydrophobe which enables the polymer particle to absorb many times their swelling capacity in monomer.

Suitable emulsifiers for the miniemulsion process according to the present invention can be selected from non-ionic, anionic and cationic emulsifiers as well as combinations thereof. Preferred are non-ionic and anionic emulsifiers and combinations thereof. Suitable non-ionic emulsifiers are arylaliphatic and aliphatic non-ionic emulsifiers, e.g. ethoxylated mono, di- and trialkylphenyls having 3 to 50 EO units and $C_4$-$C_{12}$-alkyl groups, ethoxylated long-chain alcohols having 3 to 50 EO units and $C_8$-$C_{36}$-alkyl groups and polyethylene/polypropyleneoxide block copolymers.

Preferably, ethoxylated long-chain alcohols having 10 to 50 EO units and $C_{10}$-$C_{22}$-alkyl groups are used.

Suitable examples of non-ionic emulsifiers are commercially available as Emulsogen LCN 287, Ethylan A4, Emulan NP50, Emulan TO 3070, Berol 277, Rhodasurf 3065, Triton X-405 and Genapol PF 80.

The total content of non-ionic emulsifiers is preferably below 10 wt.-%, based on the total amount of monomers. The lower limit of the amount of non-ionic emulsifiers may be 0.5, or 1, or 1.5, or 2, or 2.5, or 3 wt.-%, based on the total amount of monomers. The upper limit of the amount of non-ionic emulsifier may be 8, or 7.5, or 7, or 6.5, or 6, or 5.5, or 5 wt.-%, based on the total amount of monomers.

Suitable anionic emulsifiers that can be used for the preparation of the miniemulsion according to the present invention can be selected from $C_5$-$C_{30}$ fatty acid salts, rosin acid salts, alkali and ammonium salts of $C_8$-$C_{16}$ alkyl sulphates, ethoxylated $C_8$-$C_{22}$ alkanol sulphates having 2 to 50 EO groups, ethoxylated $C_4$-$C_{12}$ alkyl phenol sulphates having 2 to 50 EO units, $C_{10}$-$C_{18}$ alkyl sulphonates, $C_8$-$C_{18}$ alkyl aryl sulphonates, dialkyl esters of sulphosuccinate, alkyl ether phosphates and alkyl aryl ether phosphates.

Other suitable emulsifiers can be found in Houben-Weyl, Methoden der organischen Chemie, Vol. 14/1, Makromolekulare Stoffe, Georg Thieme Verlag, Stuttgart, 1961, pages 192 to 208.

Suitable examples of anionic emulsifiers are commercially available as Texapon T42, Texapon NSO, Dextrol OC 50, Disponil SLS 101 special, Disponil LDBS 25, Empimin PCA 130, Marlon A 350, Dowfax 2A1, Emulsogen EPA 073, Polystep B27, Disponil FES 32, Aerosol OT-75 E, Empimin MA80, Rhodafac RS 610.

The total content of anionic emulsifiers is preferably below 10 wt.-%, based on the total amount of monomers. The lower limit of the amount of anionic emulsifiers may be 0.5, or 1, or 1.5, or 2, or 2.5, or 3 wt.-%, based on the total amount of monomers. The upper limit of the amount of anionic emulsifiers may be 8, or 7.5, or 7, or 6.5, or 6, or 5.5 or 5 wt.-%, based on the total amount of monomers.

Suitable cationic emulsifiers that can be used for the present invention can be selected from aliphatic ammonium salts.

Suitable examples of cationic eumsifiers are cetyl trimethylammonium bromide, hexadecyl trimethyl ammonium bromide, cetyl trimethylammonium chloride, cetylpyridinium chloride, dimethyldioctadecylammonium chloride, dioctadecyldimethylammonium bromide and those commercially available as Redicote E-5, Redicote E-11, Redicote E-53, Redicote E-606, Redicote 5127, Adogen 477HG, Indulin W-1, Indulin W-5, Indulin SBT.

Other suitable emulsifiers can be found in Houben-Weyl, Methoden der organischen Chemie, Vol. 14/1, Makromolekulare Stoffe, Georg Thieme Verlag, Stuttgart, 1961, pages 192 to 208.

The total content of cationic emulsifiers is preferably below 10 wt.-%, based on the total amount of monomers. The lower limit of the amount of cationic emulsifiers may be 0.5, or 1, or 1.5, or 2, or 2.5, or 3 wt.-%, based on the total amount of monomers. The upper limit of the amount of anionic emulsifier may be 8, or 7.5, or 7, or 6.5, or 6, or 5.5, or 5 wt.-%, based on the total amount of monomers.

The total content of emulsifier is preferably below 20 wt.-%, based on the total amount of monomers. Suitable lower limits for the total amount of emulsifiers are 2.0, or 2.5, or 3.0, or 3.5, or 4.0 wt.-%, based on the total amount of monomers. Suitable upper limits for the total amount of emulsifiers are 15.0, or 14.5, or 14.0, or 13.5, or 13.0, or 12.5, or 12.0 wt.-%, based on the total amount of monomers.

Furthermore, as discussed above with respect to the general characteristics of miniemulsion, it can be advantageous to include into the oil phase a co-stabilizer selected from hydrophobic compounds having a solubility in deionized water at 25 °C of less than 0.001 wt.-%, preferably less than 0.0001 wt.-%, based on the total weight of hydrophobic compound and water.

The necessity of including a hydrophobic co-stabilizer will of course depend on the specific selection of monomers used to form the oil phase of the miniemulsion and their relative amounts.

If, for example, the monomers contained in the oil phase comprise a sufficiently high amount of, for example, long-chain alkyl acrylates like $C_8$-$C_{30}$ alkyl acrylate, these types of monomers in addition to their monomer function can also function as hydrophobic co-stabilizer, i.e. to stabilize the oil droplet of the miniemulsion, as discussed above.

But in general it is preferred, particularly in embodiments wherein the first monomers are selected to provide a polymer block having a Tg of at least 60°C or at least 80°C, to add a hydrophobic compound, as defined above, as co-stabilizer in order to stabilize the droplets of the miniemulsion. Preferably, the co-stabilizer is selected from naturally occurring oils, preferably vegetable oils, $C_8$-$C_{40}$ hydrocarbon chain-containing compounds selected from alkanes, aryl alkanes, alcohols, amides, acid esters, and ketones, and polymers.

Examples of suitable hydrophobic compounds that can be used as co-stabilizers are esters of alpha,beta-monoethylenically unsaturated carboxylic acids having 3 to 6 carbon atoms with alcohols having 12 to 30 carbon atoms in the alkyl radical, esters of vinyl alcohol and/or allyl alcohol with alkanemonocarboxylic, -sulfonic and/or -phosphonic acid having 12 to 30 carbon atoms in the molecule, amides of carboxylic acids having 3 to 6 carbon atoms with alkylamines having 12 to 30 carbon atoms in the alkyl radical. Polysiloxanes, oligomeric and/or polymeric products of addition polymerization, polycondensation and/or polyaddition, aliphatic, cycloaliphatic and/or aromatic halogenated and/or non-halogenated hydrocarbons, alkanols and/or alkylamines having at least 12 carbon atoms in the alkyl group, organosilanes and/or organosiloxanes, vegetable, animal, semisynthetic and/or synthetic oils.

Preferably, the co-stabilizer is selected from vegetable oils and $C_8$-$C_{30}$ alkanes. Most preferably, hexadecane is used as hydrophobic co-stabilizer.

In general, it is preferred to use the hydrophobic co-stabilizer in the lowest possible amount to achieve the desired stability of the oil droplets when forming the miniemulsion. Thus, the co-stabilizer is preferably present in an amount of less than 10 wt.-%, based on the weight of total monomer. Preferred lower limits for the amount of co-stabilizer are 0.1, or 0.5, or 1.0, or 1.5, or 2.0, or 2.5, or 3.0, or 3.5, or 4.0, wt.-%, based on the weight of total monomer. Preferred upper limits for the amount of the co-stabilizers are 9.0, or 8.5, or 8.0, or 7.5, or 7.0, or 6.5, or 6.0, or 5.5, or 5.0 wt.-%, based on the total amount of monomer.

Furthermore, it can be advantageous according to the present invention to employ protective colloids for further stabilization of the miniemulsions. Suitable protective colloids can be selected from polyvinyl alcohol, cellulose derivatives or vinyl pyrrolidone homopolymers or copolymers. A detailed description of suitable protective colloids can be found in Houben-Weyl, Methoden der organischen Chemie, Vol. 14/1, Makromolekulare Stoffe, Georg Thieme Verlag, Stuttgart, 1961, pages 411 to 420.

Suitable examples of commercially available protective colloids are Celvol 205, Tylose H300 P2, Mowiol 4-98, Mowiol 18-88, Natrosol 250 LR, Cellosize EP09 and PVP K-90.

The polymerization in miniemulsion according to the present invention is initiated using a free-radical initiator. Suitable free-radical initiators for the miniemulsion process according to the present invention are water-miscible free-radical initiators, preferably selected from water-soluble inorganic or organic peroxides or hydroperoxides, peroxodisulphates, and azo initiators. Depending on the selction of RAFT agents and monomer optionally a reducing agent can be present.

Suitable examples for initiators are para-menthane hydroperoxide, cumene hydroperoxide, t-butyl hydroperoxide, ammonium peroxodisulphate, sodium peroxodisulphate, potassium peroxodisulphate, hydrogen peroxide, dibenzyl hydroperoxide, azo bis(isobutyronitrile), 2,2'-azo bis(2-methylproprionitrile), 1,1'-azo bis(cyclohexane carbonitrile), 2,2'-azo bis(2-methylpropionamidine)-dihydrochloride, 2,2'-azo bis[2-(2-imidazolin-2-yl)propane]dihydrochloride, 4,4'-azo bis (4-cyanopentanoic acid), 1,1'-azo bis(cyclohexane carbonitrile).

Suitable reducing agents that can be used in addition to the initiators are, for example, sodium formaldehyde sulfoxylate and ascorbic acid derivatives that can preferably be used with an iron(II) salt.

The free-radical initiator is preferably present in an amount of 0.000001 to 1 wt.-%, based on the total weight of monomers used in the polymerization. Suitable upper limits for the amount of the free-radical initiator are 0.8, 0.6, 0.4, 0.2, or 0.1 wt.-%, based on the total amount of monomers.

As is evident from the "Handbook of RAFT Polymerization" as cited above, one advantage of RAFT polymerization in comparison to other controlled polymerizations is that a great variety of ethylenically unsaturated monomers can be used in a RAFT polymerization process.

According to the present invention, it is only important that the first monomer present in the oil phase, when providing the miniemulsion according the method according to the present invention, results in a polymer having a $T_g$ of at least 30°C. The second monomer added to the polymerization before conversion of the first monomer has reached 55 % can also be selected from a broad variety of monomers as long as the polymer resulting from these monomers has a glass transition temperature $T_g$ that is at least 5°C lower than the $T_g$ of the first monomer. The first monomer, depending on the selection of the difunctional RAFT agent, will form either the A or the B block whereas the second monomer will form the other block of the ABA block copolymer according to the present invention. Thus, it will be appreciated by a person skilled in the art that the Tg of the polymer formed by the first monomer thus corresponds to the $T_g$ of the block of the block copolymer formed by the first monomer. The Tg of the other block corresponds to the $T_g$ of the polymer formed by the second monomer and the remainder of the first monomer.

The first monomer can be employed in the method of the present invention in amounts of 30 to 70 wt-%, preferably 40 to 60 wt.-%, more preferred 45 to 55 wt.-% based on the total amount of first and second monomers.

Suitable monomers that provide homopolymers with a Tg of less than 30°C might be selected from ethylene, non-substituted and substituted dienes, esters of a vinyl alcohol and a monocarboxylic acid, alkyl acrylates, alkyl methacrylates and mixtures thereof. Specific examples are ethylene, 1,3-butadiene, 2-methyl-1,3-butadiene, 2-cholor-1,3-butadiene, conjugated straight-chain and branched pentadienes and hexadienes, vinylethyl hexanoate , vinyl neodecanoate, methyl acrylate, ethyl acrylate, iso-propyl acrylate, n-propyl acrylate, n-butyl acrylate, sec-butyl acrylate, isobutyl acrylate, neopentyl acrylate, n-hexyl acrylate, cyclohexyl acrylate, 2-ethylbutyl acrylate, heptyl acrylate, 2-heptyl acrylate, 2-ethylhexyl acrylate, isodecyl acrylate, dodecyl acrylate, lauryl ($C_{12}$-$C_{14}$) acrylate, 2-propylheptyl acrylate, behenyl acrylate, n-butyl methacrylate, n-hexyl methacrylate, 2-ethylbutyl methacrylate, n-hexyl methacrylate, n-octyl methacrylate, 2-ethylhexyl methacrylate, n-decyl methacrylate, lauryl ($C_{12}$-$C_{14}$) methacrylate, tetradecyl methacrylate, octadecyl methacrylate.

Monomers resulting in a Tg of their homopolymers between 30°C and 60°C may be selected from esters of vinyl alcohol and a monocarboxylic acid, alkyl acrylates, alkyl methacrylates and mixtures thereof.

Examples are vinyl acetate, tert.-butyl acrylate, phenyl acrylate, hexadecyl acrylate, stearyl acrylate, behenyl acrylate, n-propyl methacrylate, isobutyl methacrylate, stearyl methacrylate ($C_{16}$-$C_{18}$), benzyl methacrylate.

Hard monomers resulting in a homopolymer having a Tg of more than 60°C might be selected from esters of vinyl alcohol and a monocarboxylic acid or amide, vinyl-aromatic monomers, alkyl acrylates, alkyl methacrylates and mixtures thereof.

Specific examples are vinyl neononanoate, n-vinyl formamide, styrene, alpha-methyl styrene, o-methyl styrene, p-methyl styrene, alpha-chloro styrene, 4-chloro styrene, 4-methoxy-3-methylstyrene, 4-methoxy-2-methyl styrene, 3,4-dimethyl-alpha-methylstyrene, vinyl pyridine, isobornyl acrylate, dihydrodicyclopentadienyl acrylate, methyl methacrylate, ethyl methacrylate, isopropyl methacrylate, sec.-butyl methacrylate, tert.-butyl methacrylate, cyclohexyl methacrylate, phenyl methacrylate, 3,3,5-trimethylcyclohexyl methacrylate, isobornyl methacrylate, behenyl methacrylate.

Furthermore, monomers containing functional groups might be copolymerized in order to obtain a block copolymer according to the present invention with the desired properties. These functional monomers can be selected from acrylic acid, acrylamide, methacrylic acid, crotonic acid, itaconic acid, methacrylamide, acrylonitrile, maleic acid dinitrile, fumaric acid dinitrile, 2-hydroxyethyl acrylate, 3-hydroxypropyl acrylate, 4-hydroxybutyl acrylate, hydroxyethyl methacrylate, hydroxypropyl methacrylate, 2,3-epoxypropyl methacrylate, hydroxypropyl carbamate, ethylthioethyl methacrylate, 2-ethoxyethyl acrylate, ethyldiglycol acrylate, dimethyl maleate, dibutyl maleate, diethylhexyl maleate, dibutyl fumarate, diethylhexyl fumarate, mono(2-ethylhexyl) maleate, N-methylol acrylamide, N-methylol methacrylamide, N-isobutoxymethyl acrylamide, N-butoxymethyl acrylamide, 2-diemthylaminoethyl methacrylate, N-N-diethylaminoethyl methacrylate, tert.-butylaminoethyl methacrylate, trimethoxyvinylsilane, triethoxyvinyl silane, vinyl-tris(2-methoxyethoxy) silane, gamma-methacryloxypropyl trimethoxy silane, diacetone acrylamide, 2-(acetoacetoxy) ethyl methacrylate, methacrylamidoethyl ethylene urea, hydroxyethyl ethylene urea methacrylate, phosphate esters of polypropylene glycol mono methacrylate, phosphate esters of polyethylene glycol mono methacrylate, alkyl methacrylate phosphate, polyethoxylated behenyl methacrylate, ethoxylated tristyrylphenol methacrylate, propenoic acid phosphonyoxy esters, allyl 2,3-epoxypropyl ether, poly(oxy-1,2-ethanediyl), alpha-[1-(hydroxymethyl)-2-(2-propenyloxy)ethyl]-omega-hydroxy-, $C_{11}$-rich $C_{10-14}$-branched alkyl ethers, ammonium salts, sodium vinyl sulfonate, sodium styrene sulfonate, sodium 2-methylprop-2-ene-1-sulfonate, 1-allyloxy-2-hydroxylpropyl sulfonate.

Additional suitable monomers can be found in C. Barner-Kowollik, Handbook of RAFT Polymerization, Wiley-VCH Verlag GmbH & Co. KgaA, Weinheim, 2008, 326-333.

A person skilled in the art will appreciate that it is, according to the present invention, only decisive to select the first and second monomers in order to fulfill the Tg requirement according to the broadest concept of the present invention. All Tg values as stated in the specification as well as the dependent claims are measured in accordance with the $T_g$ measuring method as provided in the experimental part of the present application.

According to the broadest concept of the present invention, the Tg difference between the polymer resulting from the first monomer and the polymer resulting from the second monomer of the present invention is at least 5°C. Taking into account different application aspects of the emulsions as prepared by the present invention, particularly when it is desired to form TPE, a higher difference in glass transition temperature between the blocks of the block copolymers according to the present invention is preferred. Thus, the difference between the polymer resulting from the first monomer and the polymer resulting from the second monomer can preferably be at least 10°C, or 15°C, or 20 °C, or 25°C, or 30 °C, or 35°C, or 40°C, or 45°C, or 50°C, or 55°C, or 60°C, or 65°C, or 70°C, or 75°C. Alternatively, the difference between the $T_g$s of both blocks can be less than 180°C, or 170°C, or 160°C, or 150°C, or 140°C, or 130°C, or 120°C, 115°C, or 110°C, or 105°C, or 100°C, or 95°C, or 90°C, or 85°C.

According to a preferred embodiment of the present invention, the A block is constituted by the first monomer resulting in a $T_g$ of at least 30°C and the B block is constituted by the second monomer and the remainder of the second monomer. In order to achieve this preferred block copolymer structure an appropriate RAFT agent has to be selected that results in the insertion of the second monomer between the RAFT agent and the already formed A block of the harder first monomer.

Suitable RAFT agents resulting in this block copolymer structures can be selected from the group consisting of symmetrical trithiocarbonates with one trithiocarbonate function and symmetrical xanthates, dithiocarbamates, thioetherthiones and trithiocarbonates with two xanthate, diethercarbamate, thioetherthione and trithiocarbonate functions.

Suitable trithiocarbonates have generally the following structure

Y1-S-(C=S)-S-Y2

wherein Y1 and Y2 are selected from the leaving group $-CH_2Ph$, $-CH(CH_3)Ph$, $-C(CH_3)_2Ph$, $-C(CH_3)_2CN$, $-C(CH_3)_2COOEt$, $-C(CH_3)_3$, $-CH_2CH_2CH_2CH_3$, $-C(CH_3)_2COOCH_3$, $-C(CH_3)_2COOH$, $-C(CH_3)HCOOCH_3$, $-C(CH_3)HCOOH$,- $CH_2COOH$, $-CH_2COOCH_3$, N-methylene phthalimide and derivatives thereof or Y1 and Y2 together form one residue with two leaving groups which are derivatives of the formerly named. Following compounds represent suitable RAFT agents.

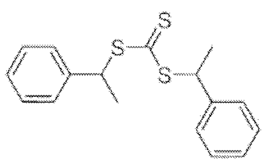

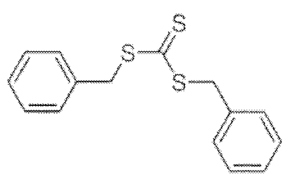

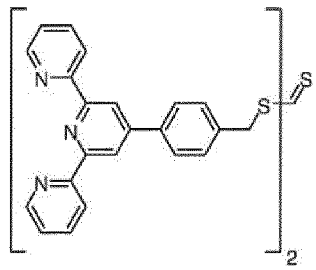

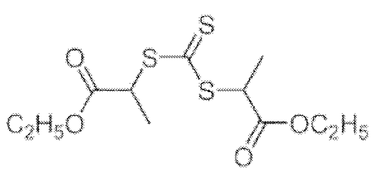

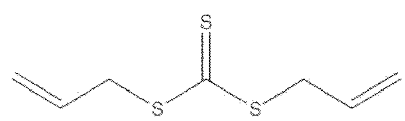

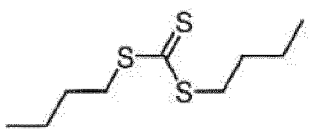

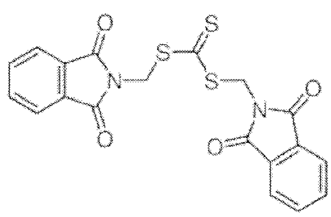

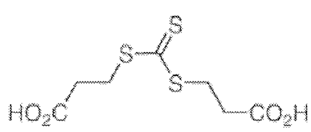

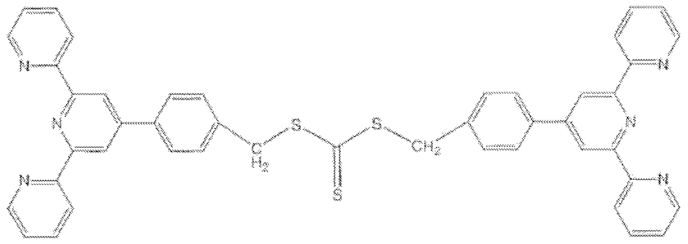

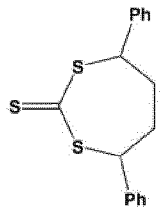

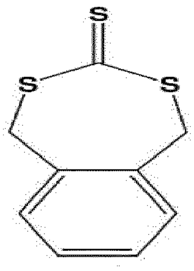

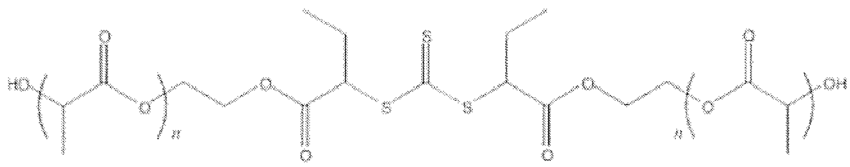

Suitable xanthates with two functions are represented by

Y1-S-(C=S)-O-X-O-(C=S)-S-Y2.

Suitable dithiocarbamates with two functions are represented by

Y1-S-(C=S)-N-X-N-(C=S)-S-Y2 or Y1-S-(C=S)-N-(C=S)-S-Y2.

Suitable thioetherthiones with two functions are represented by

Y1-S-CS-X-CS-S-Y2.

Trithiocarbonates with two functions are represented by

Y1-S-(C=S)-S-X-S-(C=S)-S-Y2.

In the above formulae X is a divalent the bridging group in between the functions, preferably selected from aliphatic, aromatic, ether, esters, amides, carbonates, siloxanes groups and mixtures thereof.

Y1 and Y2 are selected from the leaving group $-CH_2Ph$, $-CH(CH_3)Ph$, $-C(CH_3)_2Ph$, $-C(CH_3)_2CN$, $-C(CH_3)_2COOEt$, $-C(CH_3)_3$, $-CH_2CH_2CH_2CH_3$, $-C(CH_3)_2COOCH_3$, $-C(CH_3)_2COOH$, $-C(CH_3)HCOOCH_3$, $-C(CH_3)HCOOH$, $-CH_2COOH$, $-CH_2COOCH_3$, N-methylene phthalimide and derivatives thereof or Y1 and Y2 together form one residue with two leaving groups which are derivatives of the formerly named.

Other suitable RAFT agents are:

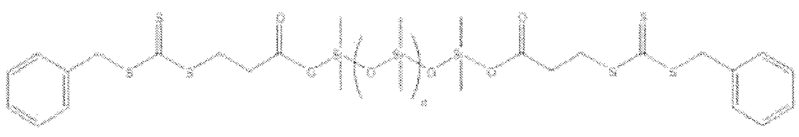

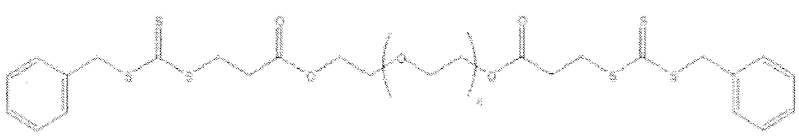

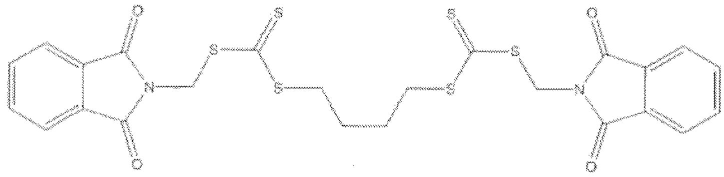

The following examples can be found in G. Moad, E. Rizzardo, S. H. Tang, Aust. J. Chem, 2005, 58, 379-410.

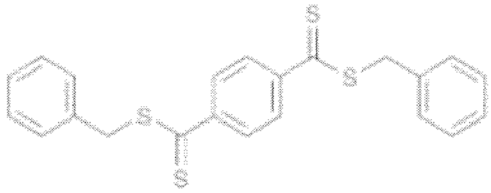

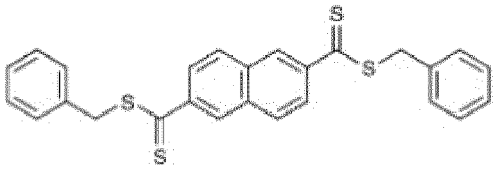

Dibenzyltrithiocarbonate is a particularly preferred RAFT agent.

A suitable range for the relative amount of the B block in the ABA tri-block copolymer is 50 to 95 weight percent based on total amount of monomers. More preferably, the range is 70 to 90 weight percent.

The reaction temperature for the RAFT polymerization in miniemulsion will depend on the selection of free-radical initiator and RAFT agent and is generally within the range of 5 to 120°C, preferably between 20 and 100°C, more preferred between 20 and 85 °C. The polymerization can be run under ambient pressure. Higher pressure might be necessary depending on the selection of monomers and reaction temperature in order to ensure that the system stays liquid, as is well known to any person skilled in the art. Furthermore depending on the selection of monomers, RAFT agent and initiator system it might be advantageous to perform the polymerization under oxygen reduced conditions, preferably under an inert gas atmosphere.

According to the present invention, it is particularly preferred if the reaction temperature is below the Tg of the polymer formed from the first monomer.

According to a preferred embodiment of the present invention, the first monomer comprises styrene and the second monomer comprises 1,3-butadiene, preferably resulting in a styrene-statistical butadiene styrene-styrene block copolymer.

The present inventors have surprisingly found that if the second monomer in the non-stop one-pot RAFT polymerization in the miniemulsion process according to the present invention is added before the conversion of the first monomer has reached 55 %, formation of non-block polymers from the first monomer can be considerably reduced, preferably essentially avoided.

Since the addition of the second monomer is started at a percentage of conversion of the first monomer of less than 55 % in the reaction system, more than 45 % of the first monomer is still present.

Consequently, the second block formed needs to be a statistical copolymer block of the second monomer in combination with the remainder of the first monomer. The conversion of the first monomer can be determined according to the method as given in the experimental part of the present application. For a given reaction system including the explicit reaction conditions samples of the reaction mixture prior to the addition of the second monomer after several time intervals can be drawn and the conversion of the first monomer can be measured as defined in the experimental part of the application. Thus, for a specific reaction system a correlation between time and conversion of the first monomer can be established in order to determine the time when a specific conversion of first monomer is achieved for adding the second monomer.

Preferably, the addition of the second monomer is started after conversion of the first monomer has reached 40 % and before the conversion of the first monomer has reached 53 %. The exact point of addition of the second monomer in terms of conversion of the first monomer will of course depend on the monomers selected and can be easily determined for each selected monomer system by simple trial and error experiments evaluating at which conversion of the first monomer, no non-block polymer resulting from the first monomer is formed. A method to determine whether

non-block polymers of the employed monomers are formed is given in the experimental part of the present application.

Thus, according to the present invention a latex of a symmetrical ABA block copolymer is formed that is essentially free of non-block polymers of the monomers constituting the A or B block. By "essentially free" is meant that the resulting latex contains less than 5 wt.-%, based on the total weight of polymer of non-block polymers of monomers constituting the A or B block. Preferably, the amount of non-block polymer is less than 4 %, 3.5 %, 3 %, 2.5 %, 2 %, 1.5 %, 1 %, 0.5 %, based on the total weight of polymer. It is most preferred that the latex of the present invention is free of any non-block polymers of the monomers constituting the A or the B block.

The amount of non-block polymers can be determined using in principle the method to determine whether non-block polymers of the employed monomers are formed as given in the experimental part of the present application, whereby for quantitative analysis the relevant non-block polymers have to be synthesized and a calibration curve has to be established. The amount of non-block polymer is obtained by determining the integration area of the non-block polymer in the measured sample and reading in the calibration curve what is the amount of non-block polymer standard generating said particular integrated area.

Furthermore, the triblock copolymer according to the present invention exhibits a narrow molecular weight distribution resulting in the polydispersity index, i.e. the ratio of weight average molecular weight to number average molecular weight of less than 3, preferably less than 2.9, or 2.8, or 2.7, or 2.6, or 2.5, or 2.4, or 2.3. The method used for determining the weight average molecular weight, number average molecular weight and polydispersity is given in the experimental part of the present application. Furthermore, it is a beneficial result of the process according to the present invention that a latex comprising an ABA block copolymer can be prepared having a solids content of at least 30 weight percent. A method for determining the solids content is given in the experimental part.

The present invention will be explained in more detail with reference to the following examples:

1. Measuring methods

Method for determining the solids content

The samples are taken from the reactor in glass vials and immediately cooled down on ice. Then, about 1 to 2 grams of latex is distributed in droplets on an aluminum dish. This aluminum dish is charged to the Halogen Moisture Analyzer Mettler Toledo HG 53 analyzer. The drying temperature is 180°C for about 10 minutes. The analyzer software directly provides the solids content in weight-%.

Calculation of the conversion

The conversion is calculated by the following equation:

$$\text{Conversion (\%)} = \text{mass of polymer in the reactor (g)} / \text{total mass of monomer charged to the reactor (g)} \times 100$$

wherein mass of polymer in the reactor (g) = solid content (%) / 100 x total mass of latex in the reactor (g) - mass of co-stabilizer (g) - mass of surfactant (g) - mass of RAFT agent (g).

Method for analysis of free Polystyrene

HPLC were carried out using a Thermo PFP column on a 1200 HPLC from Agilent Technologies equipped with a Varian 385-LC light scattering detector. Samples were measured at a flow rate of 1 mL $min^{-1}$ and 20°C with a gradient of THF and CH3CN from 35:65 to 100:0.

If there is a peak in the region of elution volume between 10 and 16.5 mL, then it is considered that free polystyrene is present in the sample.

Method for determining molecular weight and polydispersity

GPC analysis was performed by using a PSS SecCurity instrument equipped with WinGPC.RI ERC 7512 (ERMA Inc.) and UV-Vis S-3702 (SOMA) set at 304 nm were used as detectors. THF was the eluent at a flow rate of 1 mL $min^{-1}$ and 30°C. Columns SDV from PSS (500, $10^4$, and $10^6$ Å porosity) and polystyrene standards were used for the calibration.

Method for measuring glass transition temperature

The glass transition temperature was measured according to DIN53765. A conventional DSC system is used (Perkin Elmer Pyris 6 DSC). The sample is dropped into a pan. Then the sample and the empty reference pan are placed into the DSC oven. The DSC oven is closed and the temperature program for the sample preparation is started. The program starts at 30°C. The heating rate is 20 K/min. The maximum temperature is 160°C which is held for 10 min. The sample is cooled down to -20°C and again heated to 20 °C. Afterwards the DSC measuring is started. The temperature program starts at -70°C. The heating rate is 20K/min. The maximum temperature is 180°C. Finally, the oven is cooled to room temperature again. The raw data is collected and processed with the Pyris TA Manager Software.

Method for measuring particle size distribution

The particle size distribution is measured on the Particle Size Distribution Analyzer from PolymerLaboratories. The diluted latex sample under investigation and a small molecule marker solution are introduced into the system via a two position, electrically actuated valve, such that the eluent flow is not interrupted. The sample components are separated by an HDC mechanism in a "cartridge", and their concentration is measured by a UV detector. The system is calibrated using a series of particle size standards.

Example and comparative example

Preparation of the miniemulsion

In a stirred tank the following components are added in the following order at 23°C:

i. 748 g of deionized water
ii. 62 g of an aqueous solution of potassium oleate (solids content 16 %)
iii. 210 g of an organic solution of:

   1. 200 g of styrene without inhibitor
   2. 8.334 g of n-hexadecane
   3. 0.0034 g of a 50 % solution of p-menthane hydroperoxide (PMHP) in p-menthane
   4. 1.667 g of dibenzyl trithiocarbonate (DBTTC)

Using an Ultra-Turrax with 10,000 r/min, a miniemulsion with a droplet size of from 30 to 500 nm is prepared.

Polymerization of the miniemulsion

The miniemulsion is introduced into a stainless steel reactor comprising a heating jacket. In order to reduce the oxygen content in the sample to a minimum the pressure in the reactor is increased with nitrogen up to 2 bars and then reduced to 400 mbars. This procedure is repeated three times. Then, the reaction mixture is heated to 80°C within about 30 minutes to initiate the RAFT polymerization of styrene. After a reaction time as indicated in Table I a sample is withdrawn and the conversion of styrene is evaluated. At that time given in Table I 200 g of non-inhibited butadiene is added and the polymerization is continued without any interruption.

In Table 1 the total conversion after about 170 h reaction time and the resultant solids content is given. Furthermore, a sample is withdrawn and the weight average molecular weight, number average molecular weight and the polydispersity factor is determined. Furthermore, the presence of polystyrene homopolymer is determined. The results are summarized in Table I.

Table 1

| | Example 1 | | Comparative example |
|---|---|---|---|
| | AS 2689 | | AS 2900 |
| Observation | Introduction of butadiene after 54 h | | Introduction of butadiene after 72 h |
| Reaction time at Butadiene injection (h) | 54 | | 72 |

(continued)

| | Example 1 | Comparative example |
|---|---|---|
| | AS 2689 | AS 2900 |
| Observation | Introduction of butadiene after 54 h | Introduction of butadiene after 72 h |
| Conversion of Styrene before Butadiene injection (%) | 52.8 | 59.2 |
| Total conversion at butadiene injection (%) | 32.2 | 39.19 |
| Solids content at butadiene injection (%) | 12.2 | 13.49 |
| Total conversion at about 170 h (%) | 79.31 | 60.11 |
| Solids content at about 170 h (%) | 28.44 | 20.69 |
| Average particle size (nm) | 324 | 270 |
| Glass transition temperature (°C) main peak | -43.04 | -11.59 |
| Weight average molecular weight, Mw, g/mol, GPC | 129897 | 102800 |
| Number average molecular weight, Mn, g/mol, GPC | 59074 | 55500 |
| Polydispersity, Mw/Mn, GPC | 2.2 | 1.85 |
| Presence of Homopolymer of Polystyrene by HPLC (*) | No | Yes |

After quantitative conversion the solids content of Example 1 was 34.4 %.

### Claims

1. A method for the preparation of tri-block copolymers ABA by reversible addition fragmentation transfer (RAFT) polymerization comprising:

   - providing a miniemulsion in presence of a surfactant comprising

     i) a dispersed oil phase containing a first ethylenically unsaturated monomer or a first mixture of ethylenically unsaturated monomers and a difunctional RAFT-agent; and
     ii) a continuous aqueous phase;

   - subjecting the first ethylenically unsaturated monomer or first mixture of ethylenically unsaturated monomers in presence of a free-radical initiator to free-radical polymerization at a temperature ranging from 5 to 120°C;
   - starting to add a second ethylenically unsaturated monomer or a second mixture of ethylenically unsaturated monomers different from the first ethylenically unsaturated monomer or first mixture of ethylenically unsaturated monomers before conversion of the first ethylenically unsaturated monomer or first mixture of ethylenically unsaturated monomers has reached 55 % without interrupting the free-radical polymerization; and
   - continuing the free-radical polymerization, wherein

   the first ethylenically unsaturated monomer or first mixture of ethylenically unsaturated monomers is selected as to provide a polymer having a glass transition temperature (Tg) of at least 30°C and the second ethylenically unsaturated monomer or second mixture of ethylenically unsaturated monomers is selected as to provide a polymer having a glass transition temperature (Tg) of at least 5°C lower than the $T_g$ of the polymer of the first ethylenically unsaturated monomer or first mixture of ethylenically unsaturated monomers.

2. The method of claim 1, wherein the reaction temperature is lower than the Tg of the first ethylenically unsaturated monomer or first mixture of ethylenically unsaturated monomers.

3. The method of any of the preceding claims, wherein the first ethylenically unsaturated monomer or first mixture of ethylenically unsaturated monomers is selected as to provide a polymer having a $T_g$ of at least 10°C, preferably of at least 20°C, more preferred at least 40°C, most preferred at least 60°C lower than the $T_g$ of the polymer of the first ethylenically unsaturated monomer or first mixture of ethylenically unsaturated monomers.

4. The method of any of the preceding claims, wherein the first ethylenically unsaturated monomer or first mixture of ethylenically unsaturated monomers is selected as to provide a polymer having a $T_g$ of at least 60°, preferably of at least 80 °C.

5. The method of any of the preceding claims, wherein

a) the first ethylenically unsaturated monomer or first mixture of ethylenically unsaturated monomers comprise monomers selected from vinyl acetate, tert.-butyl acrylate, phenyl acrylate, hexadecyl acrylate, stearyl acrylate, behenyl acrylate, n-propyl acrylate, isobutyl methacrylate, stearyl methacrylate, benzyl methacrylate, vinyl neononanoate, N-vinyl formamide, styrene, alpha-methyl styrene, o-methyl styrene, p-methyl styrene, alpha-chloro styrene, 4-chloro styrene, 4-methoxy-3-methyl-styrene, 4-methoxy-2-methyl-styrene, 3,4-dimethyl-alpha-methyl-styrene, vinyl pyridine, isobornyl acrylate , dihydrodicyclopentadienyl acrylate, methylmethacrylate, ethyl methacrylate, isopropyl methacrylate, sec.-butyl methacrylate, tert.-butyl methacrylate, cyclohexyl methacrylate, phenyl methacrylate, 3,3,5-trimethylcyclohexyl methacrylate, isobornyl methacrylate, behenyl methacrylate, acrylic acid, acrylamide, methacrylic acid, crotonic acid, itaconic acid, methacrylamide, acrylonitrile, maleic acid dinitrile, fumaric acid dinitrile, hydroxymethyl methacrylate, hydroxypropyl methacrylate, N-methylol acrylamide, tert.butylaminoethyl methacrylate and combinations thereof; and
b) the second ethylenically unsaturated monomer is selected from ethylene, butadiene, isoprene and chloroprene, conjugated straight chain and branched pentadienes and hexadienes, vinyl ethylhexanoate, vinyl neodecanoate, methyl acrylate, ethyl acrylate, iso-propyl acrylate, n-propyl acrylate, n-butylacrylate, sec-butyl acrylate, iso-butyl acrylate, neo-pentyl acrylate, n-hexyl acrylate, cyclo-hexyl acrylate, 2-ethylbutyl acrylate, heptyl acrylate, 2-heptyl acrylate, 2-ethylhexyl acrylate, iso-decyl acrylate, dodecyl acrylate, lauryl (C12-C14) acrylate, 2-propylheptyl acrylate, behenyl acrylate, n-butyl methacrylate, n-hexyl methacrylate, 2-ethylbutyl methacrylate, n-hexyl methacrylate, n-octyl methacrylate, 2-ethylhexyl methacrylate, n-decyl methacrylate, lauryl(C12-C14) methacrylate, tetradecyl methacrylate, octadecyl methacrylate, and combinations thereof, preferably
the first ethylenically unsaturated monomer or first mixture of ethylenically unsaturated monomers comprises styrene and the second ethylenically unsaturated monomer or second mixture of ethylenically unsaturated monomers comprises butadiene.

6. The method of any of the preceding claims, wherein the difunctional RAFT-agent is a trithiocarbonate, preferably dibenzyl trithiocarbonate.

7. The method of any of the preceding claims, wherein the surfactant is selected from non-ionic, anionic and cationic surfactants and combinations thereof, preferably from anionic surfactants.

8. The method of any of the preceding claims, wherein the free-radical initiator is selected from water-miscible free-radical initiators, preferably the free-radical initiator is selected from water-soluble inorganic or organic peroxides or hydroperoxides, peroxodisulfates, and azo initiators, optionally in presence of a reducing agent.

9. The method of any of the preceding claims, wherein the miniemulsion is formed in presence of a co-stabilizer selected from hydrophobic compounds having a solubility in deionized water at 25°C of less than 0.001 wt.-%, preferably less than 0.0001 wt.-% based on the total weight of hydrophobic compound and water.

10. The method of claim 9, wherein the co-stabilizer is present in an amount of less than 10 wt.-% based on the weight of total monomer, preferably 0,1 to 10 wt.-%, more preferred 2 to 6 wt.-% based on the weight of total monomer.

11. The method of any of claims 9 or 10, wherein the co-stabilizer is selected from naturally occurring oils, preferably vegetable oils, $C_8$ - $C_{40}$ hydrocarbon chain containing compounds selected from alkanes, arylalkanes , alcohols, amids, acid esters, and ketones and polymers, preferably the co-surfactant is a $C_8$-$C_{30}$ alkane, more preferred hexadecane.

12. The method of any of the preceding claims , wherein the addition of the second ethylenically unsaturated monomer or the second mixture of ethylenically unsaturated monomers is started after conversion of the first ethylenically

unsaturated monomer or the first mixture of ethylenically unsaturated monomers has reached 40 % and before the conversion of the first ethylenically unsaturated monomer or the first mixture of ethylenically unsaturated monomers has reached 53 %.

**13.** A latex comprising a symmetrical ABA block copolymer obtainable by the method according to any of the claims 1 to 12.

**14.** The latex of claim 13, wherein the latex is essentially free of non-block polymers of the monomers constituting the A or B block.

**15.** The latex of any of claims 13 or 14, having a solid content of at least 30% by weight.

Europäisches Patentamt
European Patent Office
Office européen des brevets

# EUROPEAN SEARCH REPORT

Application Number
EP 13 18 5214

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br>A | US 2004/127634 A1 (PARKER DANE KENTON [US] ET AL) 1 July 2004 (2004-07-01)<br>* examples 4F, 4C *<br>----- | 13,15<br>1-12,14 | INV.<br>C08F293/00<br>C08F2/22 |

| TECHNICAL FIELDS SEARCHED (IPC) |
|---|
| C08F |

1

The present search report has been drawn up for all claims

| Place of search | Date of completion of the search | Examiner |
|---|---|---|
| Munich | 31 January 2014 | Degrendel, Magali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 18 5214

This annex lists the patent family members relating to the patent documents cited in the above-mentioned European search report. The members are as contained in the European Patent Office EDP file on
The European Patent Office is in no way liable for these particulars which are merely given for the purpose of information.

31-01-2014

| Patent document cited in search report | Publication date | Patent family member(s) | Publication date |
|---|---|---|---|
| US 2004127634 A1 | 01-07-2004 | AU 2003300308 A1 | 29-07-2004 |
| | | BR 0317862 A | 06-12-2005 |
| | | DE 60305978 T2 | 14-06-2007 |
| | | EP 1581562 A1 | 05-10-2005 |
| | | JP 4711685 B2 | 29-06-2011 |
| | | JP 2006512459 A | 13-04-2006 |
| | | US 2004127634 A1 | 01-07-2004 |
| | | US 2005282957 A1 | 22-12-2005 |
| | | US 2006241258 A1 | 26-10-2006 |
| | | US 2008051543 A1 | 28-02-2008 |
| | | US 2010273952 A1 | 28-10-2010 |
| | | WO 2004060928 A1 | 22-07-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9801478 A
- US 6369158 B
- US 7098280 B
- EP 1205492 A
- US 7317050 B


### Non-patent literature cited in the description


- **C. BARNER-KOWOLLIK.** Handbook of RAFT Polymerization. Wiley-VCH Verlag GmbH & Co. KGaA, 2008
- *Pure Applied Chemistry,* 2011, vol. 83 (12), 2225-2259
- **LANDFESTER, K.** *Polyreactions in Miniemulsions. Macromol. Rapid Commun.,* 2001, vol. 22, 896-936
- **FROIMOWICZ, P. ; KLINGER, D. ; LANDFESTER, K.** Photoreactive Nanoparticles as Nanometric Building Blocks for the Generation of Self-Healing Hydrogel Thin Films. *Chem. Eur. J.,* 2011, vol. 17, 12465-12475
- Methoden der organischen Chemie. **HOUBEN-WEYL.** Makromolekulare Stoffe. Georg Thieme Verlag, 1961, vol. 14/1, 192-208
- Methoden der organischen Chemie. **HOUBEN-WEYL.** Makromolekulare Stoffe. Georg Thieme Verlag, 1961, vol. 14/1, 411-420
- **C. BARNER-KOWOLLIK.** Handbook of RAFT Polymerization. Wiley-VCH Verlag GmbH & Co. KgaA, 2008, 326-333
- **G. MOAD ; E. RIZZARDO ; S. H. TANG.** *Aust. J. Chem,* 2005, vol. 58, 379-410